# EUROPÄISCHE PATENTSCHRIFT

(11) **EP 2 613 865 B1**
(45) Veröffentlichungstag und Bekanntmachung des Hinweises auf die Patenterteilung: **24.12.2014**
(21) Anmeldenummer: 11757238.8
(22) Anmeldetag: 05.09.2011
(51) Int. Cl.: B01D 46/38, B01D 50/00, B01D 46/00

(54) **FILTERVORRICHTUNG UND FILTERVERFAHREN**
FILTER DEVICE AND FILTER METHOD
DISPOSITIF DE FILTRATION ET PROCÉDÉ DE FILTRATION

(30) Priorität: 10.09.2010 DE 102010045000
(43) Veröffentlichungstag der Anmeldung: 17.07.2013
(73) Patentinhaber: Herding GmbH Filtertechnik, 92224 Amberg (DE)
(72) Erfinder: HERDING, Urs, 92224 Amberg (DE); HAJEK, Stefan, 92224 Amberg (DE)
(74) Vertreter: Wohlfrom, Karl-Heinz
(86) Internationale Anmeldenummer: PCT/EP2011/065286
(87) Internationale Veröffentlichungsnummer: WO 2012/032003

(56) Entgegenhaltungen:
- EP-A1- 1 270 060
- DE-A1- 19 938 772
- DE-A1- 19 938 903
- US-A- 4 973 458
- US-A- 5 198 002

## Beschreibung

Die vorliegende Erfindung betrifft eine Filtervorrichtung zur Reinigung von Fremdkörper mitführendem Gas, insbesondere eine mit Trockenfiltration arbeitende Filtervorrichtung, sowie ein entsprechendes Verfahren zum Filtern von Fremdkörper mitführendem Gas.

Mit Trockenfiltration arbeitende Filtervorrichtungen werden vielfältig zur Reinigung von Abluft oder sonstigen Abgasen (im Folgenden generell als Abluft bezeichnet) eingesetzt, die in Anlagen der unterschiedlichsten Industriezweige anfallen. Ein ganz besonderer Vorteil von Trockenfiltern gegenüber nass arbeitenden Filtervorrichtungen, z. B. Auswaschsystemen, ist die relativ einfache Aufarbeitung der anfallenden ausgefilterten Fremdkörper, da diese nicht in flüssigen Phasen gebunden anfallen.

Allerdings stellen sich Probleme, wenn in der Abluft Fremdkörper enthalten sind, die klebrigen Charakter haben. Dies ist beispielsweise der Fall, wenn die Abluft teerhaltige Stäube enthält, oder im Falle von Abluft von Lackieranlagen, insbesondere von Nasslackieranlagen. Solche klebrigen Fremdstoffe setzen sich nämlich bevorzugt in den Poren des Filters ab und verstopfen diese allmählich. Wegen ihrer Klebrigkeit binden sie sich fest an die Filteroberfläche und lassen sich so mit den üblicherweise bei Trockenfiltern eingesetzten Abreinigungssystemen, die mit Druckluft arbeiten, nicht mehr von der Filteroberfläche entfernen. Der Filter verliert so sehr schnell seine Abreinigungsfähigkeit und muss ausgetauscht werden.

Es ist bekannt, bei Einsatz von Trockenfiltern zum Filtern von Abluft, in der Fremdstoffe mit klebrigem Charakter enthalten sind, Filtrationshilfsstoffe zuzugeben. Dies kann stromaufwärts des Trockenfilters durch Eindüsen von Filtrationshilfsstoffen in den dem Trockenfilter zugeführten Rohgasstrom erfolgen oder es kann eine Filteroberfläche auf der Rohgasseite des Trockenfilters mit Filtrationshilfsstoffen belegt werden, bevor diese in Kontakt mit Fremdkörpern gelangt (sog. "Precoating"). Die Filtrationshilfsstoffe sollen sich mit den klebrigen Fremdkörpern in der Abluft verbinden und dafür sorgen, dass an der Filteroberfläche aus Filtrationshilfsstoffen und Fremdkörpern gebildete Agglomerate angelagert werden, die sich mit den üblichen Abreinigungsverfahren leicht wieder ablösen lassen. Ein Beispiel für die Zugabe von Filtrationshilfsstoffen unmittelbar in den Rohgasstrom stromaufwärts des Trockenfilters ist in der DE 42 11 465 C2 offenbart. Die Vorbeschichtung der Filteroberflächen mit Filtrationshilfsstoffen ist beispielsweise aus der DE 197 15 195 A1 bekannt. In beiden Fällen ist auch vorgesehen, nach einer Abreinigung des Filters anfallendes Material aufzufangen und ggf. nach einer Aufbereitung erneut dem Rohgasstrom zuzugeben.

Aus der DE 199 24 130 A1 und DE 103 61 266 A1 ist ein Verfahren bekannt, bei bei dem nach einer Abreinigung der Filtereinheit anfallendes Material in einem Auffangbehälter gesammelt wird und dieses gesammelte Material durch Einblasen von Druckluft im Auffangbehälter derart aufgewirbelt wird, dass es sich wieder an der Filteroberfläche anlagert.

Aufgabe der vorliegenden Erfindung ist es, eine verbesserte Filtervorrichtung der beschriebenen Art bereitzustellen, die insbesondere eine effektivere Ausnutzung der Filtrationshilfsstoffe ermöglicht. Außerdem soll ein entsprechendes Verfahren zum Filtern von Fremdkörper mitführendem Gas angegeben werden.

Zur Lösung dieser Aufgabe wird erfindungsgemäß eine Filtervorrichtung zur Reinigung von Fremdkörper mitführendem Gas sowie ein entsprechendes Verfahren zum Filtern von Fremdkörper mitführendem Gas vorgeschlagen mit folgenden Merkmalen: Es ist wenigstens eine Filtereinheit vorgesehen mit wenigstens einer Filteroberfläche auf einer Rohgasseite, der ein Fremdkörper enthaltender Rohgasstrom zuführbar ist, wobei dem Rohgasstrom und/oder der Filteroberfläche Filtrationshilfsstoffe zuführbar sind. An der Filteroberfläche angelagerte Filtrationshilfsstoffe und/oder Fremdstoffe sind abreinigbar. Außerdem ist eine Fluidbettanordnung vorgesehen, in welcher ein Trägerfluidstrom erzeugbar ist, derart dass abgereinigte Filtrationshilfsstoffe und/oder Fremdstoffe wenigstens zum Teil als Filtrationsaerosol in einer Umgebung der Filtereinheit gehalten werden und/oder sich wieder an einer Filteroberfläche anlagern können. Der Begriff "Filtrationsaerosol" wird hierbei ganz allgemein zur Bezeichnung eines Gemischs aus festen und/oder flüssigen Schwebepartikeln im Trägerfluidstrom verwendet, ohne eine Begrenzung des Durchmessers der Schwebepartikel zu implizieren. Bis auf welche Größe die Teilchen anwachsen können, bevor sie aufgrund ihrer Schwerkraft aus der Aerosolschicht ausgetragen werden, hängt in erster Linie von der Eigenschaften des Trägerfluidstroms ab. Es ist bei geeigneter Einstellung des Trägerfluidstroms ohne Weiteres möglich, Partikel bis zu Durchmessern von mehr als 100 µm in der Schwebe zu halten.

Die Filteroberfläche ist in dem Sinne abreinigbar, dass an der Filteroberfläche anhaftendes Material von der Filteroberfläche bei einer Abreinigungsprozedur, die in der Regel in zeitlichen Abständen durchgeführt wird, wieder ablösbar ist. Die zeitlichen Abstände werden sich in der Regel nach der Beladung der Filteroberfläche richten und so gewählt sein, dass ein vorbestimmter maximaler Druckverlust über die Filterstufe hinweg nicht überschritten wird.

Die Zugabe von Filtrationshilfsstoffen - Beispiele für solche Filtrationshilfsstoffe sind Steinmehl oder andere mineralische Stäube - führt zur Bildung von Agglomeraten von Hilfstoffen mit daran angelagerten Fremdkörpern. Solche Agglomerate sind sehr viel weniger klebrig als die reinen Fremdkörper, so dass solche Agglomerate wesentlich einfacher wieder von der Filteroberfläche ablösbar sind als die reinen Fremdkörper. Auf diese Weise gelingt ein wirksamer Einsatz von mit Trockenfiltern arbeitenden Filtervorrichtungen auch zur Reinigung von Abluft, welche klebrige Fremdkörper enthält, wie beispielsweise der in Nass- oder Trocklackieranlagen anfallenden Abluft.

Damit in genügend schneller Zeit eine ausreichende Agglomeration der Fremdkörper mit den Filtrationshilfsstoffen stattfindet, ist es günstig, eine vergleichsweise große Menge an Filtrationshilfsstoffen zuzugeben. Dies stellt außerdem sicher, dass sich die gesamte Filteroberfläche innerhalb kurzer Zeit mit einer Schicht aus Filtrationshilfsstoffen mit ggf. daran angelagerten Fremdkörpern belegt, die die Filteroberfläche schützt. Allerdings bedeutet diese Vorgehensweise, dass innerhalb eines einzigen Abreinigungszyklus der Filtereinheit nur ein kleiner Prozentsatz der zugegebenen Filtrationshilfsstoffe Agglomerate gebildet hat. Man ist natürlich bestrebt, die Hilfsstoffe möglichst effizient zu nutzen, d. h. möglichst alle zugegeben Filtrationshilfsstoffe in Agglomerate von Filtrationshilfsstoffen mit angelagerten Fremdkörpern umzusetzen. Deshalb ist die Idee entstanden, das nach einer Abreinigung des Filters anfallende Gemisch aus Filtrationshilfsstoffen und Fremdkörpern mehrfach wieder zu nutzen, bis eine möglichst vollständige Umsetzung, d. h. Belegung von Filtrationshilfsstoffen mit Fremdkörpern, stattgefunden hat.

Die erneute Zuführung von bei einer Abreinigung abgeschiedenem Material zum Rohgas bzw. der Filteroberfläche hat sich allerdings als problematisch erwiesen, weil das von der Filteroberfläche abgeschiedene und am Boden oder in einem separaten Behälter gesammelte Material häufig zusammenbackende Strukturen bildet, die sich nur schlecht wieder vereinzeln lassen. Selbst das Einblasen von Druckluft in das am Boden gesammelte Material mit Ziel, dieses Material so weit aufzuwirbeln, dass es sich wieder an die Filteroberfläche anlagert, führt nur teilweise zu befriedigenden Ergebnissen. Die Erfindung schlägt deshalb ein bisher völlig neues Vorgehen vor. Anstatt das bei einer Abreinigung von der Filteroberfläche abgelöste Material in einem Behälter oder am Boden des Rohgasraums aufzufangen und dort zu sammeln, soll dieses Material möglichst in der Nähe der Filteroberfläche gehalten bleiben. Dies ermöglicht es, dass dieses Material einerseits schnell wieder in Kontakt mit dem Rohgasstrom gelangt und andererseits auch in Kontakt mit der Filteroberfläche bleibt. Auf diese Weise können sich weitere Agglomerate bilden, bzw. bereits vorhandenen Agglomerate durch Anlagerung weiterer Fremdkörper oder anderer Agglomerate weiter wachsen. Auch kann sich das abgereinigte Material schnell wieder an die Filteroberfläche anlagern und damit einen schützenden Überzug bilden. Die beschriebenen Vorgänge können praktisch kontinuierlich ablaufen. Ein Stillsetzen der Vorrichtung zum Zwecke der Abreinigung und Neubelegung der Filteroberfläche ist nicht mehr unbedingt erforderlich.

Es hat sich gezeigt, dass mit Hilfe eines Fluidbetts ein Halten des von der Filteroberfläche abgelösten Materials möglich ist. Das Material bildet in dem Fluidbett eine Aersosolschicht aus, die von einer Trägerfluidströmung "in der Schwebe" gehalten wird. In dem Fluidbett, das nach Art einer als Wirbelbett oder "fluidized bed" bekannten Anordnung arbeitet, durchströmt eine Strömung des Trägerfluids, welche in der Regel aufwärts gerichtet ist, also der Schwerkraft entgegen wirkt, die einzelnen Partikel der aus Fremdkörpern, Filtrationshilfsstoffen und daraus gebildeten Agglomeraten gebildeten Feststoffphase, und wirkt mit diesen derart zusammen, dass die einzelnen Partikel in einem fluidisierten Zustand, gleichsam "in der Schwebe" gehalten sind. Diese Fluidbettanordnung kann so eingestellt werden, dass die aus Fremdkörpern, Filtrationshilfsstoffen und daraus gebildeten Agglomeraten gebildete Feststoffphase in optimalen Kontakt mit weiteren vom Rohgasstrom mitgeführten Fremdkörpern gelangen kann und so sehr effizient weitere Agglomerate bildet bzw. zum Anwachsen bereits gebildeter Agglomerate führt. Hält man die fluidisierte Feststoffphase in der Nähe der Filteroberfläche, gelingt es außerdem, diese nach einer Abreinigung in kurzer Zeit wieder mit einer schützenden Schicht zu belegen.

Über den Strom des Trägerfiuids lässt sich einstellen, welche maximale Massendichte Agglomerate aus Filtrationshilfsstoffen und Fremdkörpern haben dürfen, um noch fluidisiert getragen werden zu können. Überschreiten die Agglomerate diese kritische Massendichte, fallen sie allmählich immer weiter nach unten und schließlich ganz aus dem Fluidbett heraus. Auf diese Weise gelingt es, bereits gesättigte Agglomerate, für die eine weitere Verwendung zu Anlagerung weiterer Fremdstoffe bzw. zur Belegung der Filteroberfläche nicht mehr wünschenswert ist, aus der Filtervorrichtung zu entfernen, indem diese nach unten herausfallen. Gleichzeitig können in dem Maß, in dem verbrauchte Agglomerate aus dem Fluidbett herausfallen, kontinuierlich unverbrauchte Filtrationshilfsstoffe zugegeben werden. Die Filtervorrichtung braucht also nicht stillgelegt zu werden, um verbrauchte Filtrationshilfsstoffe zu ersetzen.

Vorzugsweise bildet die Fluidbettanordnung im Betrieb eine Filtrationsaerosolschicht aus Filtrationshilfsstoffen, Fremdkörpern und Agglomeraten von Filtrationshilfsstoffen mit daran angelagerten Fremdkörpern aus, die sich in vertikaler Richtung von einer Untergrenze auf Höhe oder etwas unterhalb der Unterseite der Filtereinheit bis zu einer Obergrenze auf Höhe oder etwas oberhalb der Oberseite der Filtereinheit erstreckt oder sogar noch darüber hinaus. In einem Beispiel kann die Filtrationsaerosolschicht bis zu 90 cm, vorzugsweise bis zu 60 cm und ganz besonders bevorzugt bis zu 50 cm unter die Unterseite der Filtereinheit hinab reichen.

Als Trägerfluid kommt insbesondere ein Trägergas (z. B. Luft) in Frage, welches auf der Rohgasseite der Filtereinheit vorhanden ist. Das Trägerfluid kann dabei den den Rohgasstrom selbst umfassen, im einfachsten Fall im Wesentlichen durch das den Röhgasstrom bildende Gas gebildet sein. In solchen Fällen umfasst die Fluidbettanordnung bevorzugt eine Verwirbelungsanordung, durch die auf der Rohgasseite, insbesondere in der Filtrationsaerosolschicht, eine aufwärts gerichtete, vorzugsweise turbulente Strömung erzeugbar ist. Die Verwirbelungsanordnung soll die im Rohgassstrom ohnehin vorhandene Tendenz zur Ausbildung von Wirbeln derart unterstützen, dass sich eine Wirbelschicht in der Filtrationsaerosolschicht ausbildet, die dafür sorgt, dass das Filtrationsaerosol stabil in dieser Schicht gehalten bleibt, aber dennoch eine gute Durchmischung innerhalb der Schicht erfolgt, um die Agglomeration zu fördern bzw. an der Filteroberfläche effizient einen schützenden Überzug bilden zu können.

Vorzugsweise kann die Fluidbettanordnung ferner eine Trägerfluideintraganordnung aufweisen, durch die die Rohgasseite der Filtereinheit mit Trägerfluid beaufschlagbar ist. Das Trägerfluid kann zusätzlich zu dem Rohgasstrom den Trägerfluidstrom bilden. Ferner kann die Trägerfluideintraganordnung auch so ausgebildet sein, dass sie zu einer Verwirbelung des eingebrachten Trägerfluids führt. Günstig ist es ferner, wenn das Trägerfluid in einer solchen Weise eingebracht wird, dass sich ein aufwärts gerichteter Trägerfluidstrom ergibt. Ein Vorteil bei Verwendung eines durch eine Verwirbelungs-/Trägerfluideintraganordnung erzeugten Trägerfluidstroms liegt darin, dass der Trägerfluidstrom so eingestellt sein kann - beispielsweise durch entsprechende Auslegung und/oder Ansteuerung der Verwirbelungs-/Trägerfluideintraganordnung -, dass Partikel, die schwerer sind als eine vorbestimmte kritische Massendichte, nicht mehr in der Schwebe gehalten werden und aus der Filtrationsaerosolschicht herausfallen.

Die Verwirbelungs-/Trägerfluideintraganordnung kann beispielsweise eine unterhalb der Filtereinheit angeordnete Ringleitung umfassen, welche mit einer wenigstens eine - vorzugsweise mehrere - Düsen aufweisenden Düsenanordnung versehen ist. Die Ringleitung kann im Betrieb mit Trägerfluid beaufschlagbar sein, derart, dass sich im Betrieb stromabwärts der Düsenanordnung ein zur Filtereinheit hin gerichteter und der Schwerkraft entgegen wirkender Trägerfluidstrom ausbildet. Alternativ kann beispielsweise unterhalb der Filtereinheit ein mit Fluidisieröffnungen (beispielsweise Schlitzen) versehener Fluidisierboden vorgesehen sein. Dieser Fluidisierboden wird von seiner Unterseite her mit Trägerfluid beaufschlagt, so dass das Trägerfluid durch die Fluidisieröffnungen hindurch strömt und stromabwärts des Fluidisierbodens einen zur Filtereinheit hin gerichteten und der Schwerkraft entgegen wirkenden Trägerfluidstrom ausbildet.

Die Verwirbelungs-/Trägerfluideintraganordnung kann als eine im Betrieb kontinuierlich arbeitende Einrichtung vorgesehen sein. Wenn die Trägerfluideintraganordnung einen genügend starken Trägerfluidstrom erzeugt, kann die Stärke des Trägerfluidstroms weitgehend unabhängig vom Rohgasstrom eingestellt sein.

In einer Ausführungsform kann die Filtervorrichtung ein wenigstens einen Rohgasraum, dem die Rohgasseite der Filtereinheit zugewandt ist, definierendes Gehäuse mit wenigstens einer in den Rohgasraum mündenden Rohgaszuströmöffnung umfassen. Der Rohgasstrom tritt durch die Rohgaszuströmöffnung in den Rohgasraum ein. Das Gehäuse wird dann in der Regel auch einen Reingasraum definieren, dem die Reingasseite der Filtereinheit zugewandt ist, mit einer in den Reingasraum mündenden Abströmöffnung für gefiltertes Reingas.

Es hat sich gezeigt, dass in einer günstigen Ausführungsform die Rohgaszuströmöffnung in etwa auf Höhe oder etwas unterhalb der Filtereinheit angeordnet sein kann. Dies ist vor allem dann günstig, wenn ein von unten kommender Trägerfluidstrom vorgesehen ist, weil dieser Trägerfluidstrom sich dann unterhalb der Filtereinheit mit dem Rohgasstrom vermischt und die darin enthaltenden Fremdkörper mitnimmt. Da der Trägerfluidstrom auch die Hilfstoffe trägt, sorgt dies für effiziente Agglomeration zwischen Filtrationshilfsstoffen und Fremdkörpern.

In einer weiteren Ausführungsform kann das Gehäuse wenigstens eine weitere in den Rohgasraum mündende Zuströmöffnung aufweisen, durch die Filtrationshilfsstoffe zuführbar sind. Die zugeführten Filtrationshilfsstoffe können reine oder geringfügig mit Fremdstoffen belegte Filtrationshilfsstoffe sein. Es ist günstig, wenn auch die weitere Zuströmöffnung auf Höhe oder etwas unterhalb der Filtereinheit angeordnet ist. Filtrationshilfsstoffe können durch diese weitere Zuströmöffnung in vorbestimmten Intervallen oder als kontinuierlicher Strom von Filtrationshilfsstoffen zugeführt werden, um aus dem Fluidbett ausgeschiedenes Material zu ersetzen. Auch eine ggf. erforderliche Erstbelegung der Filtervorrichtung kann durch die weitere Zuströmöffnung erfolgen. Ggf. können durch diese weitere Zuströmöffnung auch leicht verunreinigte Filtrationshilfsstoffe zugeführt werden, die nach einer Abreinigung der Filtereinheit anfallen und aus dem Fluidbett abgezweigt werden. Letztere sind leicht mit Fremdkörpern verunreinigte Filtrationshilfsstoffe, die aber nur so wenig mit Fremdkörpern belegt bzw. agglomeriert sind, dass sie noch weitere Fremdkörper anlagern können.

Alternativ oder zusätzlich kann auch eine weitere Filtrationshilfsstoff-Zuführeinrichtung vorgesehen sein, welche stromaufwärts der Filtereinheit in den Rohgasstrom mündet. Durch diese weitere Filtrationshilfsstoff-Zuführeinrichtung können dem Rohgasstrom einerseits frische Filtrationshilfsstoffe zugeführt werden, anderseits aber auch solche Filtrationshilfsstoffe, die aus dem Fluidbett abgezweigt werden und leicht mit Fremdkörpern verunreinigt sind.

In einer Ausführungsform kann die Zuströmöffnung für den Rohgasstrom so angeordnet sein, dass der Rohgasstrom in einem Winkel von etwa 90 Grad in den Trägerfluidstrom mündet. Besonders günstig ist es, wenn der Rohgasstrom unterhalb der Filtereinheit in den Trägerfluidstrom mündet.

Die Filtervorrichtung kann ferner einen der Rohgasseite zugeordneten Auffangbehälter für nicht wiederverwendbare Partikel aufweisen. Nicht wiederverwendbare Partikel sind dabei "abgesättigte" Agglomerate aus Filtrationshilfsstoffen und Fremdkörpern, die so weitgehend mit Fremdkörpern belegt sind, dass eine weitere Anlagerung von Fremdkörpern nicht mehr effizient möglich ist. Solche abgesättigten Agglomerate besitzen eine wesentlich größere Massendichte als die Fremdkörper allein und auch als nicht bzw. nur schwach mit Fremdkörpern belegte Filtrationshilfsstoffe. Je nach Einstellung des Trägerfluidstroms lässt sich eine maximale Massendichte von Partikeln einstellen, die noch schwebend im Fluidbett gehalten werden können. Sobald die Agglomerate schwerer werden als diese Massendichte, werden sie aus der Filtrationsaerosolschicht herausfallen und können in dem darunter befindlichen Auffangbehälter gesammelt werden, der vorzugsweise an einer tiefsten Stelle eine Entsorgungsöffnung aufweist, durch die Material aus Auffangbehälter abziehbar ist. Dies kann beispielsweise durch eine Vakuumfördereinrichtung geschehen.

Der Auffangbehälter kann beispielsweise unterhalb eines unterhalb der Filtereinheit angeordneten und im Wesentlichen trichterförmig ausgebildeten Bereichs des Gehäuses angeordnet sein.

Um das Abziehen der unbrauchbar gewordenen Agglomerate aus dem Auffangbehälter zu erleichtern, kann zusätzlich der Auffangbehälter eine Fluidisieranordnung aufweisen, durch die im Auffangbehälter befindliches Material derart mit Gas beaufschlagbar ist, das seine Rieselfähigkeit erhalten bleibt. Die Fluidiesiereinrichtung kann dabei kontinuierlich betrieben oder kurzzeitig während einer Entnahme von im Auffangbehälter angesammeltem Material.

Dem Auffangbehälter kann ferner eine Fördereinrichtung zugeordnet sein, durch welche Material aus dem Auffangbehälter abziehbar und der Filtrationsaerosolschicht und/oder dem Rohgasstrom stromaufwärts der Filtereinheit zuführbar ist. Eine solche Fördereinrichtung kann insbesondere bei Wiederinbetriebnahme der Filtervorrichtung hilfreich sein, weil sie es gestattet, Partikel, die beim Abschalten der Vorrichtung und dem damit unweigerlich erfolgenden Zusammenbruch des Trägerfluidstroms aus der Filtrationsaerosolschicht in den Auffangbehälter fallen, bei Wiederinbetriebnahme der Vorrichtung aus dem Auffangbehälter abzuziehen und der Filtrationsaerosolschicht bzw. dem Rohgasstrom wieder zuzuführen. In der Regel wird nämlich das nach Abschalten der Vorrichtung im Auffangbehälter liegende Material aus der Filtrationsaerosolschicht an sich noch als Filtrationshilfsstoff brauchbar sein. Ohne die Fördereinrichtung müsste es entsorgt werden. Die Fördereinrichtung kann pneumatisch mit Überdruck, z. B. in der Form eines Niederdruckinjektors, mit Unterdruck als Vakuumfördereinrichtung oder aber fluidisiert mit Druck in der Art einer Feststoffpumpe, insbesondere einer Feststoffmembranpumpe, arbeiten.

Die Abreinigung kann durch eine der Filtereinheit zugeordnete Abreinigungseinheit erfolgen. Die Abreinigungseinrichtung kann eine Druckluftabreinigungseinheit aufweisen, die oberhalb der Filtereinheit auf deren Reingasseite derart angeordnet ist, dass die Filtereinheit im Gegenstromprinzip mit Druckluft beaufschlagbar ist, um an der Filtereinheit auf der Rohgasseite abgelagertes Material abzuscheiden. Wenn die Filtereinheit eine Mehrzahl von Filterelementen aufweist, kann die Druckluftabreinigungseinheit so angesteuert sein, dass abwechselnd nacheinander immer nur ein Teil der Filterelemente abgereinigt wird, so dass sich eine möglichst gleichmäßige Menge von abgereinigten Filtrationshilfsstoffen/Fremdkörpern ergibt, die in der Schwebe gehalten werden müssen.

Vorzugsweise weist die Filtereinheit wenigstens ein Filterelement auf, welches als Starrkörperfilter ausgebildet ist.

In einer Ausführungsform kann das Filterelement einen Grundkörper aus gesintertem Material aufweisen, der vorzugsweise gesinterte Polyethylen (PE)-Partikel als Hauptbestandteil enthält. Der Grundkörper kann mit einer Oberflächenbeschichtung versehen sein, die Polytetrafluorethylen (PTFE)-Partikel enthält.

In einer alternativen Ausführungsform kann das Filterelement aus einer Anordnung von PE-Körpern, insbesondere PE-Röhren, gebildet sein, wobei auf die PE-Körper jeweils eine Filtermembran aus PTFE auflaminiert ist.

In einer Ausführungsform kann das Gehäuse wenigstens eine seitliche und durch einen entsprechende Deckel verschließbare Gehäuseöffnung aufweisen, die auf Höhe der Filterelemente angeordnet ist und durch die die Filterelemente in das obere bzw. untere Filtermodul einsetzbar sind. Das Gehäuse kann beispielsweise in einem die Filtereinheit umgebenden Bereich zylindrisch oder rechteckig ausgebildet sein und in einen unteren trichterförmigen Bereich übergehen, an dessen tiefster Stelle ggf. der Auffangbehälter anschließt.

Als Filtrationshilfsstoffe kommen insbesondere Steinmehl, z.B. Kalksteinmehl oder andere mineralische Stäube in Frage.

Der Filtereinheit kann zusätzlich noch eine - vorzugsweise ein Auswaschsystem oder einen Zyklonabscheider umfassende - Vorabscheidestufe vorgeordnet sein, in der grobe Verunreinigungen bereits abgeschieden werden.

Der Filtereinheit kann auch eine - vorzugsweise einen Speicherfilter umfassende - weitere Filterstufe nachgeordnet sein. Durch regelmäßige Überprüfung der nachgeordneten Filterstufe kann ein Versagen oder Verschlechtern der Filtereinheit festgestellt werden und die Filtereinheit ggf. ausgetauscht werden. Die nachgeordnete Filterstufe verhindert außerdem, dass ungereinigte Abluft aus der Anlage gelangt.

Bevorzugte Anwendungsgebiete der beschriebenen Filtervorrichtung sind Vorrichtungen, in denen Abluft entsteht, die klebrige und/oder teerartige Fremdstoffe enthält. Es hat sich gezeigt, dass die erfindungsgemäße Vorrichtung vor allem in Anlagen eines der folgenden Typen einbaubar ist und wertvolle Dienste leistet:
- Vorrichtung zur Beseitigung von Luftverunreinigungen in einer Nasslackieranlage,
- Vorrichtung zur Beseitigung von Luftverunreinigungen in einer Trockenlackieranlage,
- Vorrichtung zur Beseitigung von Luftverunreinigungen in einer Laserstrahlschweißanlage oder einer sonstigen Schweißrauchagsaugungsanlage,
- Vorrichtung zur Beseitigung von Verunreinigungen in Rauchgasen, insbesondere in Rauchgasen, die bei Verbrennungsprozessen anfallen (bei solchen Verbrennungsprozessen entstehen nicht selten teerhaltige oder rußartige Produkte, die aus dem Abgas als Verunreinigungen abgeschieden werden müssen);
- Vorrichtung zur Beseitigung von Luftverunreinigungen in einer Anlage zur Hohlraumversiegelung,
- Vorrichtung zur Beseitigung von Luftverunreinigungen in einer Anlage zum Verkleben von Metallteilen;
- Vorrichtung zur Beseitigung von gasförmigen Verunreinigungen in einem Abgasstrom unter Zugabe von chemisorptiven Filtrationshilfsstoffen, welche mit den gasförmigen Verunreinigungen chemisch reagieren (beispielsweise kann in Abgasen enthaltenes Schwefeldioxid, SO₂, oder HCl-Gas durch Zugabe von Calciumhydroxid, Ca(OH)₂, als Filtrationshilfsmittel wirksam am Trockenfilter abgeschieden werden, dabei findet die Chemisorption gleichzeitig mit mit Abscheidung von festen oder flüssigen Aerosolen aus dem Abgas statt).

Erfindungsgemäß wird ferner ein Verfahren zur Reinigung von Fremdkörper mitführendem Gas vorgeschlagen, bei dem die vorangehend beschriebene Vorrichtung eingesetzt wird. Bei diesem Verfahren wird insbesondere wenigstens einer Filtereinheit mit wenigstens einer Filteroberfläche auf einer Rohgasseite ein Fremdkörper enthaltender Rohgasstrom zugeführt, wobei dem Rohgasstrom und/oder der Filteroberfläche Filtrationshilfsstoffe zugeführt werden. Es werden ferner an der Filteroberfläche angelagerte Filtrationshilfsstoffe und/oder Fremdstoffe abgereinigt und ein Trägerfluidstrom erzeugt, derart dass abgereinigte Filtrationshilfsstoffe und/oder Fremdstoffe wenigstens zum Teil als Filtrationsaerosol in einer Umgebung der Filtereinheit gehalten werden und sich wieder an einer Filteroberfläche anlagern können.

Die Erfindung wird im Folgenden anhand eines Ausführungsbeispiels näher erläutert. Es zeigt:
- Figur 1: in einer Seitenansicht eine Filtervorrichtung zur Reinigung von Fremdkörper mitführendem Gas nach einer Ausführungsform; und
- Figur 2: die Vorrichtung aus Figur 1 in einer gegenüber der Ansicht aus Figur 1 um 90 Grad gedrehten Seitenansicht.

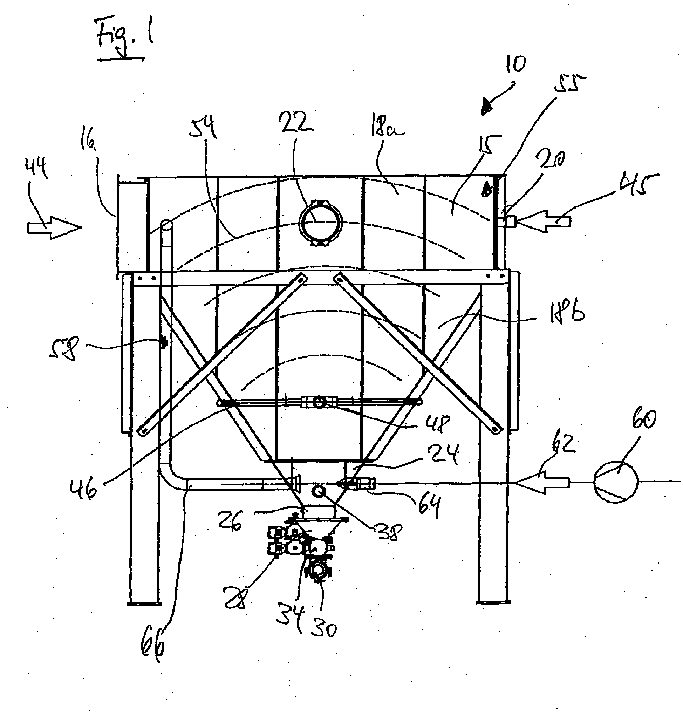

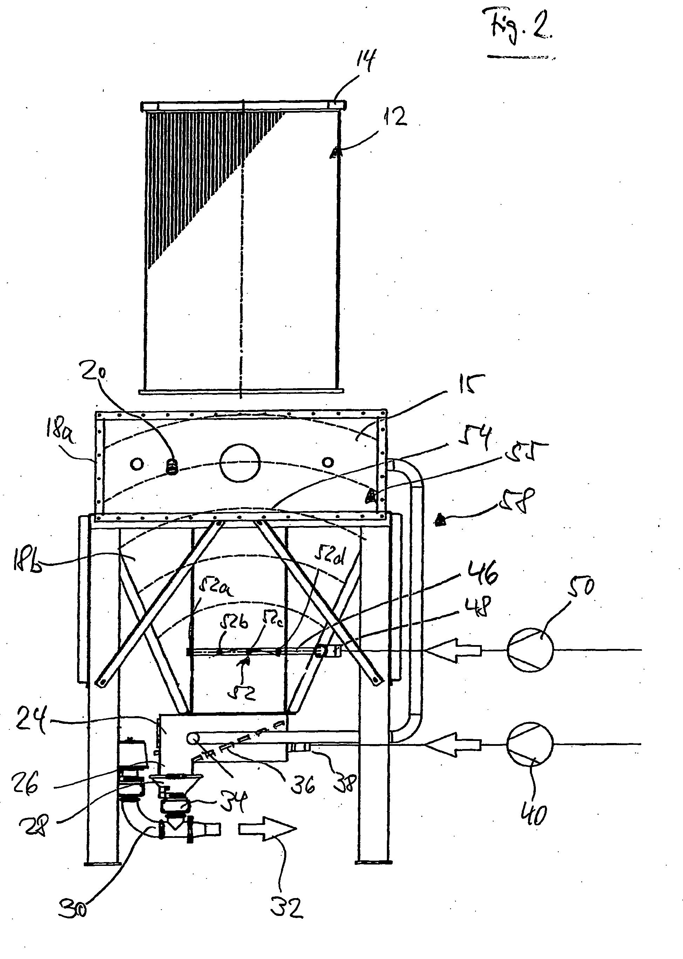

Figur 1 und 2 zeigen in jeweils um 90 Grad zueinander verdrehten Seitenansichten eine Filtervorrichtung 10 zur Reinigung von Fremdkörper mitführendem Gas nach einer Ausführungsform. Die Vorrichtung 10 umfasst eine Filtereinheit 12 (in Figur 1 nicht gezeigt, in Figur 2 ist eines der Filterelemente 14 der Filtereinheit 12 angedeutet). Die Filtereinheit 12 ist oberhalb einer Rohgaszuströmöffnung 16 in einem der Übersicht halber weggelassenen oberen Teil eines Gehäuses 18 angebracht. Die Filtereinheit 12 umfasst mehrere als Starrkörperfilter ausgebildete Filterelemente 14, die an einer gemeinsamen oberen Halterung befestigt sind und parallel zueinander in vertikaler Richtung verlaufen, wie in Figur 2 schematisch angedeutet ist, die eines der Filterelemente 14 an seiner Einbauposition zeigt.

In dem in Figur 1 und 2 abgebildeten unteren Teil des Gehäuses 18, welcher einen Rohgasraum 15 umschließt, sind neben der Rohgaszuströmöffnung 16 noch eine weitere Zuströmöffnung 20 sowie eine Klappe 22 ausgebildet. Alle diese Öffnungen 16, 20, 22 liegen im Wesentlichen auf gleicher Höhe in einem ringförmigen oberen Bereich 18a des unteren Gehäuseteils 18. In einem unterhalb dieses Bereichs 18a sich anschließenden Bereich 18b nimmt das Gehäuse 18 die Form eines Trichters mit sich nach unten verjüngenden Seitenwänden an. Nach unten schließt sich an das Gehäuse 18 ein Auffangbehälter 24 an, in welchem nicht weiter brauchbares Material gesammelt wird, bevor es durch eine an der tiefsten Stelle des Auffangbehälters 24 angeordnete Entsorgungsöffnung 26 und einen Entsorgungstrichter 28 in eine Vakuumfördereinrichtung 30 geleitet und entsorgt wird, siehe den Pfeil 32 in Figur 1. Der Entsorgungstrichter 28 ist normalerweise durch ein Ventil 34 an seiner tiefsten Stelle verschlossen und wird nur kurzzeitig geöffnet, wenn Material aus dem Auffangbehälter 24 ausgeschleust werden soll. Um eine Entsorgung des im Auffangbehälter 24 gesammelten Materials, das in der Regel sehr stark mit klebrigen Fremdkörpern belegt ist und unter Umständen relativ lange Zeit dort lagert, zu gewährleisten, befindet sich in dem Auffangbehälter 24 ein schräg verlaufender Fluidisierboden 36, der über einen Anschluss 38 mit Luft versorgt wird. An den Anschluss 38 ist ein nur schematisch mit 40 bezeichnetes Gebläse angeschlossen, über das unter Druck stehende Luft in den Fluidisierboden 36 geleitet wird. Der in dem Gebläse 40 erzeugte Luftstrom ist so eingestellt, dass zwar das in dem Auffangbehälter 24 gesammelte Material einerseits so weit aufgelockert wird, dass es gut rieselfähig und damit leicht über die Entsorgungsöffnung 26 abziehbar ist, dass aber dieses Material anderseits nicht wieder aus dem Auffangbehälter 24 in das Gehäuse 18 bzw. in den Rohgasraum 15 gelangen kann.

Der schematisch mit dem Pfeil 44 bezeichnete Rohgasstrom, welcher Fremdkörper mit sich führt, die mit der Vorrichtung 10 abgeschieden werden sollen, tritt über die Rohgasszuströmöffnung 16 in den vom Gehäuse 18 umschlossenen Rohgasraum 15 ein, der auf seiner Oberseite von der Rohgasseite der Filtereinheit 12 begrenzt wird. Der Rohgasstrom 44 wird nach Eintritt in den Rohgasraum 15 zu der Filtereinheit 12 transportiert. Auf der der Rohgaszuströmöffnung 16 gegenüberliegenden Seite des Gehäuses 18 befindet sich eine weitere Zuströmöffnung 20, durch welche Filtrationshilfsstoffe, in der Regel Steinmehl, aus einem nicht gezeigten Vorratsbehälter in den Rohgasraum 15 geleitet werden können. Der Strom an Filtrationshilfsstoffen ist in Figur 1 mit einem Pfeil 45 bezeichnet.

In einem unteren Bereich des trichterförmigen Gehäusebereichs 18b befindet sich ein Anschluss 48, der mit einer horizontal durch das Gehäuse 18b verlaufenden Ringleitung 46 in Verbindung steht. Die Ringleitung 46 befindet sich oberhalb der Auffangbehälters 24 und insbesondere immer oberhalb des im Auffangbehälter 24 gesammelten Materials. Mit dem Anschluss 48 ist ein weiteres Gebläse 50 verbunden, das in Figur 2 ebenfalls nur schematisch angedeutet ist. Das Gebläse 50 kann beispielsweise, wie im Übrigen auch das Gebläse 40, einen Seitenkanalverdichter umfassen. In bevorzugter Ausgestaltung wird das Gebläse 50 im Betrieb der Vorrichtung 10 kontinuierlich betrieben.

In der Ringleitung 46 sind mehrere Düsen 52a, 52b, 52c, 52d ausgebildet, die in Figur 2 schematisch angedeutet sind. Über diese eine Düsenanordnung 52 bildenden Düsen 52a, 52b, 52c, 52d tritt unter Druck stehende Luft, die über das Gebläse 50 erzeugt und über den Anschluss 48 in die Ringleitung 46 eingeleitet wird, aus und bildet nach Umlenkung durch die Innenwände des trichterförmigen Gehäusebereichs 18b einen im Wesentlichen vertikal nach oben gerichteten Trägerfluidstrom 54. Dieser Trägerfluidstrom 54 ist in den Figuren durch gestrichelt eingezeichnete kreisbogenförmige Kurven angedeutet Der Trägerfluidstrom 54 bewegt sich, von der Düsenanordnung 52 ausgehend, mit einer Geschwindigkeit nach oben, die bestimmt wird durch den vom dem Gebläse 50 erzeugten Gasdruck und die geometrische Anordnung der Düsen 52a, 52b, 52c, 52s sowie deren Anordnung zum Gehäuse 18. Ringleitung 46 mit Düsenanordnung 52, Anschluss 48 und Gebläse 50 gehören zu einer Fluidbettanordnung 55, welche im Betrieb des Gebläses 50 den Trägerfluidstrom 54 erzeugt.

Auf Höhe der Rohgaszuströmöffnung 16 vereinigt sich der Trägerfluidstrom 54 mit dem Rohgasstrom 44. Dies führt dazu, dass im Rohgasstrom 44 mitgeführte Fremdkörper mit dem Trägerfluidstrom 54 nach oben getragen werden und so zu der Filtereinheit 12 transportiert werden. Wenn nötig werden über die weitere Zuströmöffnung 20 Filtrationshilfsstoffe zugeführt, wobei sich der Strom aus Filtrationshilfsstoffen 45 ebenfalls mit dem Trägerfluidstrom 54 vermischt und die Filtrationshilfsstoffe somit von dem Trägerfluidstrom 54 mitgenommen und nach oben zu der Filtereinheit 12 hin transportiert werden. Auf dem Weg zur Filtereinheit 12 hin vermischen sich diese Ströme 54,44 und 45. Dies führt dazu, dass im Rohgasstrom 44 mitgeführte Fremdkörper mit den Filtrationshilfsstoffen zusammenstoßen und Agglomerate bilden, die dann an den Filteroberflächen der Filtereinheit 12 angelagert werden.

Der Filtereinheit 12 ist eine in den Figuren nicht dargestellte Druckluftabreinigungseinheit zugeordnet, die sich auf der Reingasseite der Filtereinheit 12 oberhalb der Filterelemente 14 befindet. In gewissen zeitlichen Abständen beaufschlagt die Druckluftabreinigungseinheit ein jeweiliges Filterelement 14, so dass dieses von seiner Reingasseite her einen Druckstoß erfährt. Der Druckstoß führt dazu, dass auf der Rohgasseite des jeweiligen Filterelements 14 angelagertes Material, wie beschrieben entweder reine Filtrationshilfsstoffe oder Agglomerate aus Filtrationshilfsstoffen mit daran angelagerten Fremdkörpern, sich von dem Filterelement 14 ablöst und infolge seiner Schwerkraft nach unten fällt.

Sobald die abgereinigten Partikel (wie gesagt, Filtrationshilfsstoffe oder Agglomerate aus Filtrationshiifsstoffen mit daran angelagerten Fremdkörpern) nach ihrer Ablösung vom Filterelement 14 in den Einfluss des Trägerfluidstroms 54 geraten, erfahren sie nicht nur eine Kraft nach unten infolge ihrer Schwerkraft, sondern auch eine nach oben gerichtete Kraft aufgrund der Aufwärtsströmung des Trägerfluids. Dies führt dazu dass diese Partikel, zumindest solange sie eine bestimmte kritische Massendichte nicht überschreiten, sich nicht weiter nach unten bewegen, sondern solange wieder nach oben steigen, bis sich die Schwerkraft und die vom Trägerfluidstrom 54 ausgeübte Kraft die Waage halten. Die Folge ist, dass sich in einer bestimmten Höhe, die in etwa von der Höhe der Filtereinheit 12 bis zur Höhe der Rohgaszuführöffnung 16 hinab reicht, eine relativ stabile Filtrationsaerosolschicht ausbildet. In dieser Filtrationsaerosolschicht werden die Filtrationshilfsstoffe, die im Rohgas enthaltenen Fremdkörper und auch die aus denselben gebildeten Agglomerate in der Schwebe gehalten. Dies gilt zumindest für noch nicht abgesättigte Agglomerate, d.h. solche Agglomerate, deren Massendichte noch nicht infolge allzu starker Belegung mit Fremdkörpern größer geworden ist als die kritische Massendichte.

Vorzugsweise ist die Strömungsgeschwindigkeit des Trägerfluidstroms 54 und/oder die Strömungsgeschwindigkeit des Rohgasstroms 44 so groß gewählt, dass sich im Trägerfluidstrom 54 zumindest ab der Vereinigung mit dem Rohgasstrom 44 Turbulenz ausbildet. Dann bleibt die Filtrationsaerosolschicht zwar insgesamt stabil, allerdings werden die einzelnen Partikel dieser Schicht durch die Turbulenz gut durchmischt, was eine effiziente Agglomeration bzw. Neubelegung der Filteroberflächen mit Filtrationsshilfsstoff unterstützt.

Sobald eine Abreinigung eines jeden Filterelements 14 der Filtereinheit 12 stattgefunden hat, befinden sich in der Filtrationsaerosolschicht ausreichend viele Partikel aus Filtrationshilfsstoff, um eine weitere effiziente Agglomeration mit Fremdkörpern, die im Rohgasstrom mitgeführt werden, zu bewirken. Auf eine Zuführung von frischen Filtrationshilfsstoffen über die weitere Zuführöffnung 20 kann dann im Prinzip verzichtet werden. Allerdings werden bei der Vorrichtung 10 solche Partikel, die infolge der Anlagerung zahlreicher Fremdkörper an Filtrationshilfsstoff schwerer geworden sind, nicht mehr in der Filtrationsaerosolschicht gehalten und fallen nach unten in den Auffangbehälter 24. Dieser Effekt ist durchaus erwünscht, denn solche Partikel sind nicht mehr in der Lage, weitere Fremdkörper anzulagern und daher grundsätzlich zur weiteren Verwendung als Filtrationshilfsstoff unbrauchbar. Der dabei im Betrieb laufend eintretende Verlust an Filtrationshilfsstoffen kann durch frische Filtrationshilfsstoffe ausgeglichen werden, die über die weitere Zuströmöffnung 20 zugeführt werden.

Bei erster Inbetriebnahme der Vorrichtung 10 geht man am besten so vor, dass zunächst das Gebläse 50 in Betrieb genommen wird, so dass sich der Trägerfluidstrom 54 ausbildet. Danach wird über die weitere Zuströmöffnung 20 Filtrationshilfsstoff zugegeführt. Dies führt einerseits zur Ausbildung einer stabilen Filtrationsaerosolschicht und anderseits dazu, dass sich bereits ein erster schützender Belag aus Filtrationshilfsstoff auf den Filteroberflächen der Filtereinheit 12 ausbildet. Danach wird der Rohgasstrom 44 über die Rohgaszuführöffnung 16 zugeschaltet. Sobald im weiteren Betrieb der Druckverlust über einem jeweiligen der Filterelemente 14 der Filtereinheit 12 größer wird als betriebsgemäß vorgesehen (oder nach einer vorbestimmten Betriebszeit), findet eine Abreinigung dieses Filterelements 12 statt. Dies liefert weiteres Material für die Filtrationsaerosolschicht. Auf eine weitere Zugabe von frischen Filtrationshilfsstoffen kann spätestens ab dem Zeitpunkt verzichtet werden, zu dem alle Filterelemente einmal abgereinigt sind, abgesehen von Zugabe von Filtrationshilfsstoffen zur Kompensation von Verlusten an verbrauchten Filtrationshilfsstoffen, die aus der Filtrationsaersolschicht ausgetragen werden.

Die Vorrichtung 10 weist darüber hinaus noch eine Injektoreinrichtung 58 auf. Diese Injektoreinrichtung 58 umfasst ein Gebläse 60, das einen unter Druck stehenden Luftstrom 62 an einen Niederdruckinjektor 64 und von dort in den Auffängbehälter 24 liefert. Auf der dem Niederdruckinjektor 64 gegenüber liegenden Seite des Auffangbehälters 24 mündet eine Niederdrucksteigleitung 66 in den Auffangbehälter 24. Die Niederdrucksteigleitung 66 führt nach oben und mündet ungefähr auf Höhe der Rohgaszuführöffnung 16 in den Rohgasraum 15. Alternativ könnte die Niederdrucksteigleitung 66 auch an einer weiter stromaufwärts liegenden Stelle in den Rohgasstrom 44 münden.

Die Injektoreinrichtung 58 ist hilfreich, wenn die Vorrichtung 10 nach einer Betriebsunterbrechung wieder in Betrieb genommen wird. Wird die Vorrichtung 10 nämlich abgestellt, wird in der Regel selbst bei vollständig belegten Filteroberflächen in der Filtrationsaersolschicht noch Filtrationshilfsstoff vorhanden sein, der noch nicht vollständig abgesättigt ist und damit an sich noch weiter verwendet werden könnte. Sobald allerdings das Gebläse 50 abgestellt wird, fällt der Trägerfluidstrom 54 in sich zusammen, mit der Folge das alles Material in der Filtrationsaerosolschicht in den Auffangbehälter 24 fällt und von dort aus eigentlich über die Entsorgungsöffnung 26 entsorgt werden müsste. In dieser Situation gestattet es die Niederdruckinjektoreinrichtung 58, das im Auffangbehälter 24 liegende, an sich noch brauchbare Material bei Wiederinbetriebnahme der Vorrichtung 10 aus dem Auffangbehälter 24 abzuziehen und der Filtrationsaerosolschicht wieder zuzuführen. Hierzu wird zunächst das Gebläse 50 eingeschaltet, so dass sich der Trägerfluidstrom 54 ausbildet. Danach wird das Gebläse 40 eingeschaltet, so dass sich das am Boden des Auffangbehälters 24 liegende Material auflockert und einen fluidisierten Zustand einnimmt, in dem es leicht aus dem Auffangbehälter 24 ausgetragen werden kann. Danach wird das Gebläse 60 eingeschaltet und das im Auffangbehälter 24 befindliche Material über die Leitung 66 der Filtrationsaersolschicht zugeführt. Die Entsorgungsöffnung 26 ist dabei geschlossen. Sobald der Auffangbehälter 24 entleert ist, kann das Gebläse 60 wieder abgeschaltet werden und die Vorrichtung 10 wie oben beschrieben betrieben werden.

Alternativ zu der Niederdruckinjektoreinrichtung 58 könnte auch eine Vakuumfördereinrichtung vorgesehen sein, um das im Auffangbehälter 24 liegende Material saugend abzuziehen und dem Rohgasstrom 44 stromaufwärts des Gehäuses zuzugeben oder unmittelbar in den Rohgasraum 15 in der Nähe der Rohgaszuströmöffnung 16 zu fördern. Als weitere Alternative könnte die Förderung fluidisiert mit Druck geschehen, z.B. mit Hilfe einer Feststoffmembranpumpe.

## Patentansprüche

1. Filtervorrichtung (10) zur Reinigung von Fremdkörper mitführendem Gas, umfassend:
- wenigstens eine Filtereinheit (12) mit wenigstens einer Filteroberfläche auf einer Rohgasseite, der ein Fremdkörper enthaltender Rohgasstrom (44) zuführbar ist, wobei dem Rohgasstrom (44) und/oder der Filteroberfläche Filtrationshilfsstoffe zuführbar sind;
- eine Druckluftabreinigungseinheit, die oberhalb der Filtereinheit (12) auf deren Reingasseite derart angeordnet ist, dass die Filtereinheit (12) im Gegenstromprinzip mit Druckluft beaufschlagbar ist, um an der Filtereinheit (12) auf der Rohgasseite abgelagertes Material abzuscheiden, wobei an der Filteroberfläche angelagerte Agglomerate aus Filtrationshilfsstoffen und Fremdstoffen abreinigbar sind; sowie
- eine Fluidbettanordnung (55), umfassend eine Trägerfluideintraganordnung (46, 48, 50, 52) mit einer unterhalb der Filtereinheit angeordneten Ringleitung (46), welche mit einer wenigstens eine Düse (52a, 52b, 52c, 52d) aufweisenden Düsenanordnung (52) versehen ist, wobei die Ringleitung (46) im Betrieb mit Trägerfluid beaufschlagbar ist, derart, dass sich im Betrieb stromabwärts der Düsenanordnung (52) ein zur Filtereinheit (12) hin gerichteter und der Schwerkraft entgegen wirkender Trägerfluidstrom (54) ausbildet und abgereinigte Agglomerate aus Filtrationshilfsstoffen und Fremdstoffen wenigstens zum Teil als Filtrationsaerosol in einer Umgebung der Filtereinheit (12) gehalten werden und sich wieder an einer Filteroberfläche anlagern können.

2. Filtervorrichtung (10) nach Anspruch 1,
ferner aufweisend eine Verwirbelungsanordung, durch die auf der Rohgasseite in der Umgebung der Filtereinheit (12), insbesondere in der Filtrationsaerosolschicht, Turbulenz erzeugbar ist.

3. Filtervorrichtung (10) nach Anspruch 1 oder 2,
wobei die Trägerfluideintraganordnung (46, 48, 50, 52) derart ausgebildet ist, dass sie einen kontinuierlichen Trägerfluidstrom erzeugt.

4. Filtervorrichtung nach einem der Ansprüche 1 bis 3,
wobei die Trägerfluideintraganordnung (46, 48, 50, 52) derart steuerbar/regelbar ist, dass Partikel, die eine vorbestimmte Massendichte überschreiten, nicht mehr in der Schwebe gehalten werden und aus der Filtrationsaerosolschicht herausfallen.

5. Filtervorrichtung nach einem der Ansprüche 1 bis 4,
ferner umfassend ein wenigstens einen Rohgasraum (15), dem die Rohgasseite der Filtereinheit (12) zugewandt ist, definierendes Gehäuse (18) mit wenigstens einer in den Rohgasraum (15) mündenden Rohgaszuströmöffnung (16).

6. Filtervorrichtung (10) nach Anspruch 5,
wobei das Gehäuse (18) wenigstens eine weitere in den Rohgasraum (15) mündende Zuströmöffnung (20) aufweist, durch die Filtrationshilfsstoffe zuführbar sind.

7. Filtervorrichtung (10) nach einem der Ansprüche 1 bis 6,
wobei der Rohgasstrom (44) unterhalb der Filtereinheit (14) in den Trägerfluidstrom (54) mündet.

8. Filtervorrichtung (10) nach einem der Ansprüche 1 bis 7,
ferner aufweisend einen der Rohgasseite zugeordneten Auffangbehälter (24) für nicht wiederverwendbare Partikel.

9. Filtervorrichtung (10) nach Anspruch 8,
wobei der Auffangbehälter (24) eine Fluidisieranordnung (36, 38, 40) aufweist, durch die im Auffangbehälter (24) befindliches Material derart mit Gas beaufschlagbar ist, das seine Rieselfähigkeit erhalten bleibt.

10. Filtervorrichtung (10) nach Anspruch 8 oder 9,
ferner aufweisend eine Fördereinrichtung (58), durch welche Material aus dem Auffangbehälter (24) der Filtrationsaerosolschicht und/oder dem Rohgasstrom (44) stromaufwärts der Filtereinheit (14) zuführbar ist.

11. Filtervorrichtung (10) nach einem der Ansprüche 1 bis 10,
wobei die Filtereinheit (12) wenigstens ein Filterelement (12) aufweist, welches die als Starrkörperfilter ausgebildet ist.

12. Filtervorrichtung (10) nach Anspruch 11,
wobei das Filterelement (12) einen Grundkörper aus gesintertem Material, das insbesondere gesinterte Polyethylen-Partikel als Hauptbestandteil enthält, aufweist und wobei der Grundkörper mit einer Oberflächenbeschichtung versehen ist, die Polytetrafluorethylen-Partikel enthält, oder aus einer Anordnung von Polyethylen-Röhren gebildet ist, wobei auf die Polyethylen-Röhren jeweils eine Filtermembran aus Polytetrafluorethylen auflaminiert ist.

13. Filtervorrichtung (10) nach einem der Ansprüche 6 bis 12,
wobei das Gehäuse (18) wenigstens eine seitliche und durch einen entsprechende Deckel verschließbare Gehäuseöffnung aufweist, die auf Höhe der Filtereinheit (12) angeordnet ist und durch die die Filterelemente (14) einsetzbar sind.

14. Verwendung einer Filtervorrichtung (10) nach einem der Ansprüche 1 bis 13 in einer Vorrichtung zur Reinigung von klebrige und/oder teerartige Fremdstoffe enthaltender Abluft, insbesondere in einer Vorrichtung eines der folgenden Typen:
- Vorrichtung zur Beseitigung von Luftverunreinigungen in einer Nasslackieranlage,
- Vorrichtung zur Beseitigung von Luftverunreinigungen in einer Trockenlackieranlage,
- Vorrichtung zur Beseitigung von Luftverunreinigungen in einer Laserstrahlschweißanlage oder einer sonstigen Schweißrauchagsaugungsanlage,
- Vorrichtung zur Beseitigung von Verunreinigungen in Rauchgasen, insbesondere in Rauchgasen, die bei Verbrennungsprozessen anfallen;
- Vorrichtung zur Beseitigung von Luftverunreinigungen in einer Anlage zur Hohlraumversiegelung,
- Vorrichtung zur Beseitigung von Luftverunreinigungen in einer Anlage zum Verkleben von Metallteilen;
- Vorrichtung zur Beseitigung von gasförmigen Verunreinigungen in einem Abgasstrom unter Zugabe von chemisorptiven Filtrationshilfsstoffen, welche mit den gasförmigen Verunreinigungen chemisch reagieren.

15. Verfahren zur Reinigung von Fremdkörper mitführendem Gas, bei welchem:
- wenigstens einer Filtereinheit (12) mit wenigstens einer Filteroberfläche auf einer Rohgasseite ein Fremdkörper enthaltender Rohgasstrom (44) zugeführt wird, wobei dem Rohgasstrom (44) und/oder der Filteroberfläche Filtrationshilfsstoffe zugeführt werden und wobei an der Filteroberfläche angelagerte Agglomerate aus Filtrationshilfsstoffen und Fremdstoffen mit Hilfe einer oberhalb der Filtereinheit (12) auf deren Reingasseite angeordneten Druckluftabreinigungseinheit im Gegenstromprinzip abgereinigt werden; sowie
- eine unterhalb der Filtereinheit angeordnete Ringleitung (46), in welcher eine wenigstens eine Düse (52a, 52b, 52c, 52d) aufweisende Düsenanordnung (52) vorgesehen ist, mit Trägerfluid beaufschlagt wird, derart, dass sich stromabwärts der Düsenanordnung (52) ein zur Filtereinheit (12) hin gerichteter und der Schwerkraft entgegen wirkender Trägerfluidstrom (54) ausbildet, welcher dafür sorgt, dass abgereinigte Agglomerate aus Filtrationshilfsstoffen und Fremdstoffen wenigstens zum Teil als Filtrationsaerosol in einer Umgebung der Filtereinheit (12) gehalten werden und sich wieder an einer Filteroberfläche anlagern können.

## Claims

1. A filter device (10) for cleaning gas entraining foreign matter, comprising:
- at least one filter unit (12) having at least one filter surface on a raw gas side of the same to which filter surface a raw gas stream (44) containing foreign matter can be supplied, wherein filtration aids can be supplied to the raw gas stream (44) and/or to the filter surface;
- a pressurized-air cleaning-off unit that is arranged above the filter unit (12) on the clean gas side of the same such that pressurized air is applicable to the filter unit (12) in accordance with the counterflow principle in order to remove material deposited on the filter unit (12) on its raw gas side, wherein agglomerates of filtration aids and foreign matter that are attached to the filter surface can be cleaned off; and
- a fluidized bed arrangement (55) comprising a carrier fluid introduction arrangement (46, 48, 50, 52) which comprises an encircling conduit (46) arranged underneath the filter unit and provided with a nozzle arrangement (52) comprising at least one nozzle (52a, 52b, 52c, 52d), with the encircling conduit (46) being adapted to be supplied with carrier fluid in operation such that in operation a carrier fluid stream (54) is established downstream of the nozzle arrangement (52), which carrier fluid stream is directed towards the filter unit (12) and acts counter to the force of gravity, and cleaned-off agglomerates of filtration aids and/or foreign matter are held at least in part as a filtration aerosol in an environment of the filter unit (12) and can re-attach to a filter surface.

2. The filter device (10) according to claim 1,
further comprising a swirler arrangement through which turbulence can be generated on the raw gas side in the environment of the filter unit (12), in particular in the filtration aerosol layer.

3. The filter device (10) according to claim 1 or 2,
wherein the carrier fluid introduction arrangement (46, 48, 50, 52) is designed such that it generates a continuous carrier fluid stream.

4. The filter device according to any of claims 1 to 3,
wherein the carrier fluid introduction arrangement (46, 48, 50, 52) is adapted to be controlled such that particles exceeding a predetermined mass density are no longer held suspended and drop out of the filtration aerosol layer.

5. The filter device according to any of claims 1 to 4,
further comprising a housing (18) defining at least one raw gas space (15) having the raw gas side of the filter unit (12) facing thereto, said housing (18) having at least one raw gas inflow opening (18) leading into the raw gas space (15).

6. The filter device (10) according to claim 5,
wherein the housing (18) has at least one additional inflow opening (20) leading into the raw gas space (15), through which the filtration aids can be supplied.

7. The filter device (10) according to any of claims 1 to 6,
wherein the raw gas stream (44) joins the carrier fluid stream (54) underneath the filter unit (14).

8. The filter device (10) according to any of claims 1 to 7,
further comprising a collecting container (24) for non-reusable particles, that is associated with the raw gas side.

9. The filter device (10) according to claim 8,
wherein the collecting container (24) comprises a fluidizing arrangement (36, 38, 40) through which material located in the collecting container (24) can be acted upon by gas such that the flowability thereof is retained.

10. The filter device (10) according to claim 8 or 9,
further comprising a conveying means (58) through which material from the collecting container (24) can be supplied to the filtration aerosol layer and/or the raw gas stream (44) upstream of the filter unit (14).

11. The filter device (10) according to any of claims 1 to 10,
wherein the filter unit (12) comprises at least one filter element (12) that is in the form of a rigid-body filter.

12. The filter device (10) according to claim 11,
wherein the filter element (12) has a base body of sintered material, containing in particular sintered polyethylene particles as main constituent, and wherein the base body is provided with a surface coating containing polytetrafluoroethylene particles, or is formed of an arrangement of polyethylene tubes, with a filter membrane of polytetrafluoroethylene being laminated onto each of the polyethylene tubes.

13. The filter device (10) according to any of claims 6 to 12,
wherein the housing (18) has at least one lateral housing opening that can be closed by a corresponding lid and is arranged at the height of the filter unit (12) and through which the filter elements (14) can be inserted.

14. The use of a filter device (10) according to any of claims 1 to 13 in a device for cleaning exhaust air containing sticky and/or tarry foreign matter, in particular in a device of one of the types indicated hereinafter:
- a device for eliminating air pollutions in a wet painting or varnishing facility,
- a device for eliminating air pollutions in a dry painting or varnishing facility,
- a device for eliminating air pollutions in a laser beam welding plant or other welding fume extraction system,
- a device for eliminating pollutions in flue gases, in particular in flue gases arising in combustion processes,
- a device for eliminating air pollutions in a cavity sealing facility,
- a device for eliminating air pollutions in a plant for adhesively joining metal parts;
- a device for eliminating gaseous pollutions in an exhaust gas stream with addition of chemisorptive filtration aids that chemically react with the gaseous pollutions.

15. A method of cleaning gas entraining foreign matter,
comprising:
- supplying a raw gas stream (44) containing foreign matter to at least one filter unit (12) having at least one filter surface on a raw gas side of the same, with filtration aids being supplied to the raw gas stream (44) and/or to the filter surface and with agglomerates of filtration aids and foreign matter attached to the filter surface being cleaned off according to the counterflow principle by way of a pressurized-air cleaning-off unit that is arranged above the filter unit (12) on the clean gas side of the same; and
- wherein an encircling conduit (46) arranged underneath the filter unit and provided with a nozzle arrangement (52) comprising at least one nozzle (52a, 52b, 52c, 52d) is supplied with a carrier fluid in such a way that a carrier fluid stream (54) is established downstream of the nozzle arrangement (52), which carrier fluid stream is directed towards the filter unit (12) and acts counter to the force of gravity, which carrier fluid stream (54) is adapted to hold cleaned-off agglomerates of filtration aids and foreign matter at least in part as filtration aerosol in an environment of the filter unit (12) and/or allows for re-attachment of a such agglomerates to a filter surface.

## Revendications

1. Dispositif de filtration (10) pour la purification de gaz entraînant des corps étrangers, comprenant :
- au moins une unité filtrante (12) comprenant au moins une surface filtrante d'un côté concerné par les gaz bruts, à laquelle peut être acheminé un courant de gaz bruts (44) contenant des corps étrangers, des substances auxiliaires de filtration pouvant être acheminées au courant de gaz bruts (44) et/ou à la surface filtrante ;
- une unité d'épuration de type pneumatique qui est disposée au-dessus de l'unité filtrante (12) sur le côté de cette dernière concerné par les gaz purs, de telle sorte que l'unité filtrante (12) peut être sollicitée avec de l'air comprimé selon le principe à contre-courant, afin de séparer la matière qui s'est déposée contre l'unité filtrante (12) du côté concerné par les gaz bruts, des agglomérats constitués par des substances auxiliaires de filtration et des substances étrangères qui se sont déposés contre la surface filtrante pouvant être éliminés par épuration ; et
- un agencement de lit fluidisé (55) comprenant un agencement d'introduction de fluide de support (46, 48, 50, 52) comprenant un conduit périphérique (46) disposé en dessous de l'unité filtrante, qui est muni d'un agencement de buses (52) présentant au moins une buse (52a, 52b, 52c, 52d), le conduit périphérique (46) pouvant être sollicité en état de marche avec un fluide de support de telle sorte que l'on obtient la formation, en état de marche, dans la direction aval de l'agencement de buses (52), d'un courant de fluide de support (54) qui est orienté en direction de l'unité filtrante (12) et qui agit à l'encontre de la gravité, et de telle sorte que les agglomérats éliminés par épuration, constitués par des substances auxiliaires de filtration et par des substances étrangères, sont maintenus au moins en partie sous la forme d'un aérosol de filtration dans un environnement de l'unité filtrante (12) et peuvent à nouveau se déposer contre une surface filtrante.

2. Dispositif de filtration (10) selon la revendication 1, présentant en outre un agencement de tourbillonnement par lequel on peut obtenir une turbulence sur le côté concerné par les gaz bruts dans l'environnement de l'unité filtrante (12), en particulier dans la couche d'aérosol de filtration.

3. Dispositif de filtration (10) selon la revendication 1 ou 2, dans lequel l'agencement d'introduction de fluide de support (46, 48, 50, 52) est réalisé de telle sorte qu'il génère un courant de fluide de support en continu.

4. Dispositif de filtration selon l'une quelconque des revendications 1 à 3, dans lequel l'agencement d'introduction de fluide de support (46, 48, 50, 52) peut être commandé/réglé de telle sorte que des particules qui dépassent une densité massique prédéfinie, ne sont plus maintenues en suspension et se séparent par précipitation de la couche d'aérosol de filtration.

5. Dispositif de filtration selon l'une quelconque des revendications 1 à 4, comprenant en outre un logement (18) définissant au moins un espace (15) pour les gaz bruts, en direction duquel est orienté le côté de l'unité filtrante (12) concerné par les gaz bruts, comprenant au moins une ouverture d'entrée (16) pour les gaz bruts, qui débouche dans l'espace (15) pour les gaz bruts.

6. Dispositif de filtration (10) selon la revendication 5, dans lequel le logement (18) présente au moins une ouverture d'entrée supplémentaire (20) débouchant dans l'espace (15) pour les gaz bruts, à travers laquelle on peut acheminer les substances auxiliaires de filtration.

7. Dispositif de filtration (10) selon l'une quelconque des revendications 1 à 6, dans lequel le courant de gaz bruts (44) débouche en dessous de l'unité filtrante (14) dans le courant de fluide de support (54).

8. Dispositif de filtration (10) selon l'une quelconque des revendications 1 à 7, présentant en outre un récipient de récupération (24) attribué au côté concerné par les gaz bruts, pour des particules non réutilisables.

9. Dispositif de filtration (10) selon la revendication 8, dans lequel le récipient de récupération (24) présente un agencement de fluidisation (36, 38, 40) à travers lequel la matière se trouvant dans le récipient de récupération (24) peut être sollicitée avec du gaz de façon à conserver sa fluidité.

10. Dispositif de filtration (10) selon la revendication 8 ou 9, présentant en outre un mécanisme de transport (58) par lequel de la matière peut être acheminée à partir du récipient de récupération (24) à la couche d'aérosol de filtration et/ou au courant de gaz bruts (44) en amont de l'unité filtrante (14).

11. Dispositif de filtration (10) selon l'une quelconque des revendications 1 à 10, dans lequel l'unité filtrante (12) présente au moins un élément filtrant (12) qui est réalisé à la manière d'un filtre sous la forme d'un corps rigide.

12. Dispositif de filtration (10) selon la revendication 11, dans lequel l'élément filtrant (12) présente un corps de base constitué d'une matière frittée qui contient à titre de constituant principal en particulier des particules de polyéthylène frittées, et dans lequel le corps de base est muni d'une enduction superficielle qui contient des particules de polytétrafluoréthylène ou qui est formée à partir d'un agencement de tubes en polyéthylène, une membrane filtrante en polytétrafluoréthylène étant stratifiée respectivement sur les tubes en polyéthylène.

13. Dispositif de filtration (10) selon l'une quelconque des revendications 6 à 12, dans lequel le logement (18) présente au moins une ouverture de logement latérale et qui peut être fermée par un couvercle correspondant, qui est disposée à hauteur de l'unité filtrante (12) et par laquelle on peut introduire les éléments filtrants (14).

14. Utilisation d'un dispositif de filtration (10) selon l'une quelconque des revendications 1 à 13 dans un dispositif pour la purification d'air évacué contenant des substances étrangères collantes et/ou goudronneuses, en particulier dans un dispositif d'un des types repris ci-après :
- un dispositif pour éliminer les impuretés de l'air dans une installation de laquage ou de vernissage par voie humide ;
- un dispositif pour éliminer les impuretés de l'air dans une installation de laquage ou de vernissage par voie sèche ;
- un dispositif pour éliminer les impuretés de l'air dans une installation de soudage par faisceau laser ou dans une autre installation d'aspiration des gaz de fumée de soudure ;
- un dispositif pour éliminer les impuretés de l'air dans les gaz de fumée en particulier dans des gaz de fumée que l'on obtient dans des processus de combustion ;
- un dispositif pour éliminer les impuretés de l'air dans une installation destinée à l'étanchéisation d'espaces creux ;
- un dispositif pour éliminer les impuretés de l'air dans une installation destinée au collage de pièces métalliques ;
- un dispositif pour éliminer les impuretés gazeuses dans un courant de gaz d'échappement avec addition de substances auxiliaires de filtration agissant par chimisorption qui réagissent par voie chimique avec les impuretés gazeuses.

15. Procédé pour la purification de gaz entraînant des corps étrangers, dans lequel :
- on achemine à au moins une unité filtrante (12) comprenant au moins une surface filtrante d'un côté concerné par les gaz bruts, un courant de gaz bruts (44) contenant des corps étrangers, des substances auxiliaires de filtration étant acheminées au courant de gaz bruts (44) et/ou à la surface filtrante et des agglomérats constitués par des substances auxiliaires de filtration et des substances étrangères qui se sont déposés contre la surface filtrante sont éliminés par épuration selon le principe à contre-courant, à l'aide d'une unité d'épuration de type pneumatique disposée au-dessus de l'unité filtrante (12) sur le côté de cette dernière concerné par les gaz purs ; et
- on sollicite avec un fluide de support un conduit périphérique (46) disposé en dessous de l'unité filtrante, dans lequel on prévoit un agencement de buses (52) présentant au moins une buse (52a, 52b, 52c, 52d), de telle sorte que l'on obtient la formation, dans la direction aval de l'agencement de buses (52), d'un courant de fluide de support (54) orienté en direction de l'unité filtrante (12) et agissant à l'encontre de la gravité, qui fait en sorte que les agglomérats éliminés par épuration, constitués par des substances auxiliaires de filtration et par des substances étrangères, sont maintenus au moins en partie sous la forme d'un aérosol de filtration dans un environnement de l'unité filtrante (12) et peuvent à nouveau se déposer contre une surface filtrante.
